Europäisches Patentamt

European Patent Office

Office européen des brevets

(19)

(11) Publication number: **0 051 170**
**A1**

(12) # EUROPEAN PATENT APPLICATION

(21) Application number: **81108222.1**

(22) Date of filing: **12.10.81**

(51) Int. Cl.³: **F 16 J 15/32**
**F 16 C 33/78**

(30) Priority: **31.10.80 IT 6866580**

(43) Date of publication of application:
**12.05.82 Bulletin 82/19**

(84) Designated Contracting States:
**DE FR GB SE**

(71) Applicant: **RIV-SKF OFFICINE DI VILLAR PEROSA S.p.A**
**Via Mazzini 53**
**I-10123 Torino(IT)**

(72) Inventor: **Vignotto, Angelo**
**Via Montevideo, 8**
**I-10100 Torino(IT)**

(74) Representative: **Bongiovanni, Guido et al,**
**c/o Ingg. Carlo e Mario Torta Via Viotti 9**
**I-10121 Torino(IT)**

(54) A sealing assembly including axial and radial lips and a labyrinth.

(57) A two-element sealing assembly comprises a first (5) and second (6) annular element each of which can be mounted on one of the said members (2, 4) and rigidly connected to it, the first (5) of the said annular elements being provided with at least one pair of annular lips (12, 13) of resiliently deformable material, a first (12) of which extends in a direction substantially parallel to the axis of the said first element (2) and a second (13) of which extends in a direction substantially radial to the said axis, and the second (6) of the said annular elements being provided with at least a first (20) and a second (21) sliding surface which can come into contact with the said first (12) and second (13) lip respectively when the said elements are mounted on associated rotating members (2, 4), in such a way that between each of the said lips (12, 13) and the associated sliding surfaces (20, 21) there is transmitted a predetermined pressure for preventing the passage of lubricant and contaminating substances between the said chamber and the external environment.

Fig.1

- 1 -

### A Sealing Assembly including axial and radial lips and a labyrinth.

The present invention relates to a sealing assembly which can be interposed between two members one of which is rotatable and the other of which is fixed, for example the rings of a rolling element bearing, and in particular to a sealing assembly of the two lip type.

As is known, in mechanical apparatus it is necessary to ensure a good seal between parts which are in relative movement, for example between a rotating shaft and the base which supports the associated bearings or between the rings of a single rolling element bearing, in such a way as to separate the apparatus into a succession of sealed chambers for the purpose of preventing the escape of lubricant from the apparatus or the ingress into it of dust or external polluting agents.

Various constructional arrangements for this purpose are known.

In one of these there is formed a so-called labyrinth seal in which a series of rings, alternately secured to the fixed part and the movable part give rise to a path which presents a significant resistance to passage from one environment to the other.

In other constructional arrangements there are used seals of various types, this latter term meaning assemblies including one or more sealing rings with suitable form, in one or more pieces, made of soft and reslilient material possibly with metal reinforcement and provided with parts which are carried in contact under predetermined pressure with the surface of the movable member to make a seal with it.

In the case of a rotary shaft in a cylindrical seat, the seal can be made by means of radial pressure applied on the surface of the shaft and obtained with a seal constituted by a ring in which there is formed an annular space and which is provided with a radial ridge which can slide on the said surface and be held in contact with it by a resilient annular reinforcement lodged within the space itself. Similarly, in the same case, sealing can be ensured with a two-part seal constituted by a ring of soft reslient material secured on the fixed member and provided with an annular lip, and by a metal disc of suitable form secured on the rotary member on which the lip slides. In this way there is obtained an axial seal between lip and disc and, moreover, the disc by rotating rigidly with the movable member provides a centrifuging effect on the contaminating agents with which it comes into contact.

A further constructional arrangement, used for the seal between the rings of a rolling element bearing, consists in the interposition between these of a metal screen on which there is vulcanised or connected in any other way, a ring of soft material which slides on a surface of one of the two parts in relative movement.

- 3 -

The first arrangement, the so-called labyrinth seal, does not have a very high efficiency unless made unacceptably large, in that the higher the requirement to prevent the passage of a fluid, for example, the escape of lubricant, the more difficult it is to delay any such escape for an extended period. Moreover, this sealing system involves constructional difficulties and complications in assembly.

The other constructional arrangements described are not entirely satisfactory either, and have various disadvantages.

In particular, they are only able to prevent the passage in a single direction (from the outside towards the inside of the chamber which they protect or vice versa) in that a possible pressure in the opposite direction from that to which they are subject in use is able to raise the sealing lips and therefore negate their action. Morevoer, the sealing action of the devices described above is anyway never ever very efficient because of the single and limited annular region of contact between the sealing lips of the seals and the surfaces on which they slide.

The object of the present invention is that of providing a sealing assembly of the type described with which the seal will be significantly improved, and particularly in which an efficient seal is ensured, both to prevent the escape of lubricant from the chamber which the seals protect and to prevent the entry into it of external contaminants.

According to the present invention there is therefore provided a sealing assembly which can be interposed

- 4 -

between two members between which there is a peripheral relative velocity to form a seal between a cavity between the said members and the external environment around the cavity itself, characterised by the fact that it comprises a first and a second annular element each of which can be mounted on one of the said members and rigidly connected thereto, the first of the said annular elements being provided with at least one pair of annular lips of resiliently deformable material the first of which extends in a direction substantially parallel to the axis of the said first element and a second of which extends in a direction substantially radial to the said axis, and the second of the said annular elements being provided with at least a first and a second sliding surface which can come into contact with the said first and second lip respectively when the said elements are mounted on associated rotating members, in such a way that between each of the said lips and the associated sliding surfaces there is transmitted a predetermined pressure for preventing the passage of lubricant and contaminating substances between the said chamber and the external environment.

For a better understanding of the present invention there will be given, by way of non limitative example, a description of several embodiments thereof, with reference to the attached drawings, in which:

Figure 1 is an axial section of the sealing assembly of the invention interposed between a shaft and a seat formed on a base of a machines;

- 5 -

Figure 2 is a section on an enlarged scale of the sealing assembly of Figure 1, in which the constituent elements are shown separated;

Figure 3 is an axial section of a bearing including two rings of balls, in which the sealing assembly of the invention having a slightly different structure from that of Figure 1 is mounted;

Figure 4 is a section on an enlarged scale of the sealing assembly of Figure 3, in which the elements have been shown separated; and

Figure 5 is a section of a bearing having two rings of rollers in which a sealing assembly of the invention which is little different from the preceding embodiments is mounted.

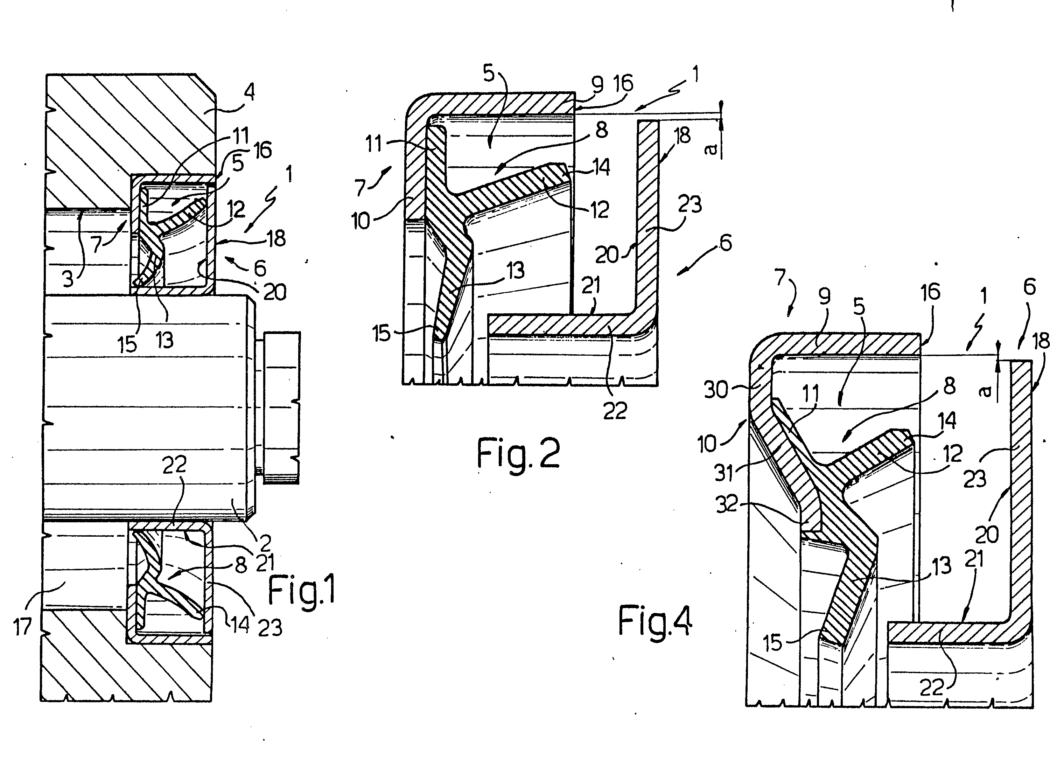

As illustrated in Figure 1, a sealing assembly forming the subject of the present invention, generally indicated 1, is interposed between a rotatable shaft 2 and an annular seat 3 coaxial to the shaft itself and formed on a base 4.

The sealing assembly 1 (Figure 2) is constituted by a sealing ring 5, which in the example of Figure 1 is secured in the seat 3, and by a rigid screen 6 which in the same example is secured to the shaft 2. The sealing ring 5 includes a support element 7 of annular form of metal or other rigid and highly resistant material onto which there is vulcanised or otherwise fixed, for example by means of welding or gluing a sealing element 8 made     of a soft and resiliently deformable material, such as an elastomeric material, a rubber or a synthetic plastics material.   The support element 7 has an L-shape section with a first part 9 parallel to the axis of the shaft and second part 10 orthogonal to the other and extending radially towards the axis of the shaft.   The sealing element 8 includes, on the other hand, a first substantially flat part 11 parallel to the part 10 of the element 7 to which it is welded.   From this part there extend two annular lips one of which,   indicated 12, extends in a direction substantially parallel to the axis of the shaft 2 and has a predetermined, but rather small inclination, in such a way as to space itself from the axis of the element itself; a second annular lip 13 starts from the part 11 and from the root of the first lip 12, and extends with a slight predetermined inclination in a direction substantially perpendicular to that of the said axis.   The ends 14 and 15 of the two lips 12 and 13 are formed in a manner such as to be able to slide respectively over the surfaces 20, 21 of the screen 6 which is constituted by a sleeve part 22 of suitable thickness and a flange part 23 perpendicular thereto and of external diameter such as to leave, once assembled, a predetermined play, indicated a between itself and the part 9 of the support element 7.

The support element 7 can be rigidly lodged in a seat 3 formed in  the base 4 to which it is coupled by means of part 9.

The fixing of the sealing ring 5 and of the screen 6 to the seat 3 and the shaft 2 respectively can be effected

- 7 -

in any convenient manner, for example by slightly forcing it as has been illustrated in Figure 1, or else by means of suitable fixing members and parts, such as shoulders, spacers, threaded rings, resilient rings and the like.

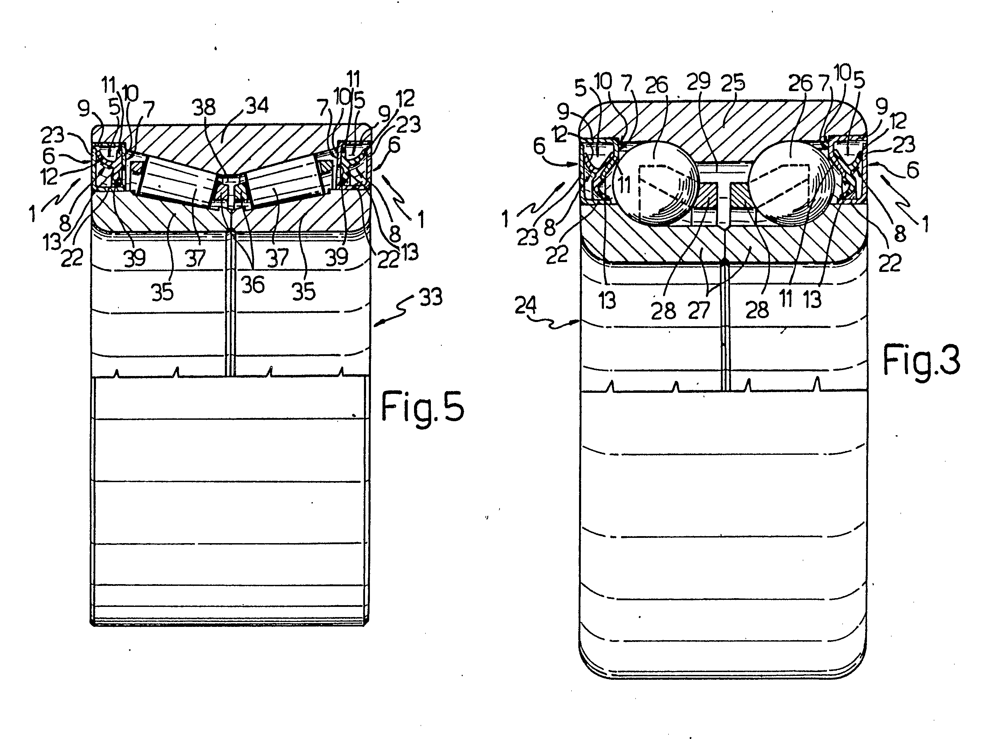

Figure 3 illustrates an application of the sealing assembly 1 in the case of a rolling element bearing 24 having two rings of balls. This includes an outer ring 25, balls 26, two inner half rings 27 and spacer cages 28. Between the ring 25 and the half rings 27 there are arranged sealing assemblies 1 in such a way as to isolate the inner chamber 29 where the rolling bodies 26 are located from the outer environment. This sealing assembly 1 corresponds to a slightly different embodiment of the present invention illustrated on an enlarged scale in Figure 4, where the constituent elements thereof are shown separated.

In this case also the sealing assembly is composed of a rigid screen 6 identical to that illustrated in Figure 2, and a sealing ring 5. This latter includes a support element 7 of metal or other rigid material having a high strength onto which there is vulcanised or otherwise fixed a sealing element 8 made of a soft and resiliently deformable material, such as an elastomeric material, a rubber or a synthetic plastics material. The support element 7 has an annular structure with a first part 9 parallel to the axis of the said element identical to that of Figure 2, a second part 10 substantially orthogonal to the first, extending radially towards the axis mentioned above, and which after a first section 30 perpendicular to the part 9 has a second section 31 inclined by a predetermined angle which terminates with a further short section 32 parallel to the first section 30. The sealing element 8, on the other hand, includes a first substantially flat part 11 which follows the profile of the part 10 of the element 7 to which it is welded. From this part there extend two annular lips 12 and 13 identical to those illustrated in Figure 2.

In Figure 5, finally, there is shown a conical roller bearing 33 comprising an outer ring 34, two inner half rings 35, spacer cages 36 and roller bodies 37, the inner chamber 38 of which is protected by means of the interposition between the outer ring 34 and the inner half rings 35 of sealing assemblies 1. These constitute a further embodiment of the present invention, differing from that of the previous embodiments by the presence in the radial lip 13 of one or more holes 39 of predetermined dimensions.

The operation of the sealing assembly 1 is as follows.

The sealing ring 5 is secured, thanks to the part 9, to the seat 3 formed on the base 4. After having possibly moistened the lips 12 and 13 with grease for the purpose of improving the sliding seal the rigid screen 6 is mounted by pushing it along the shaft 2 until the flange part 23 comes edge to edge with the rim 16 of the part 9. In this way the lips 12 and 13 are resiliently deformed because of their dimensions and form a sliding resilient seal by coming into contact with their ends 14 and 15 respectively against the surface 20 of the flange part 23 and the surface 21 of the sleeve part 22. The end 14 faces the external environment whilst the end 15 faces the inner chamber 17 delimited by the seat 3 and the shaft 2. Any possible lubricant which might escape from the annular chamber 17 meets the sliding radial seal constituted by the annular lip 13 which slides with a certain predetermined pressure on the surface 21 of the sleeve part 22. Since the end 15 of the lip 13 faces inwardly of the said chamber 17 the greater the thrust of the lubricant which attempts to escape the greater the sealing effect. In fact, the radial pressure between the lip 13 and surface 21 due to the resilient deformation of the lip caused thereto by the mounting of the screen 6 is increased by a contribution made by the pressure of the lubricant which, by pressing on the wall of the lip facing the chamber 17 presses the end 15 more firmly against the surface 22.

Similarly, external contaminants which might try to penetrate into the chamber 17 would encounter axial sliding seal constituted by the annular lip 12 which slides with a certain predetermined pressure on the surface 20 on the flange part 23. Since the end 14 of the lip 12 faces the external environment in this case the greater the increase in pressure exerted by the contaminants on the seal the greater is the sealing effect by increasing the pressure of adherence between surface 20 and lip 12.

The ingress of external contaminants is likewise impeded or at least limited first by the labyrinth seal between the part 9 and the flange 23 consequent on the play of, and then by the action of centrifugation exerted by the surface 18 of, the flange part 23 which, by rotating rigidly with the shaft, ejects away from the seal the contaminating agents with which it comes into contact.

The seal can be further improved by filling the annular chamber which is formed between the surfaces 20 and 21 and the associated lips 12 and 13 with grease during assembly. The grease, as well as serving to impede the passage of lubricant or contaminants, constitutes a reserve of lubricant for the sliding seals extending the life of the seal and reducing the friction.

The possible presence of one or more holes 39 on the inner lip 13 serves to permit the discharge of a possible excess pressure which may arise within the chamber protected by the seal assembly, especially in the case of use on rolling element bearings.

From what has been described the advantages of the present invention are apparent. In particular it provides a seal simultaneously and equally effective both against possible escape of lubricant and against external contaminants. The seals, moreover, are positioned one in a radial direction and the other in an axial direction so that a possible displacement in use, due for example to vibrations or shocks would entirely or partly eliminate only one of the said seals leaving the other perfectly effective, it being necessary to consider a simultaneous radial and axial displacement as being extremely improbable. Finally, to the seal due to the pressure there is associated that due to the resistance opposed to the passage offered by the said labyrinth seal constituted by the

- 11 -

gap and that caused by the centrifuging action of the rigid screen.

A further advantage is constituted by the fact that the sliding seals are formed between the lips and suitably formed surfaces and not, as was the case in known devices, directly between lip and surface of one of the two rotating members. This makes it possible to give particular attention to the state of the sliding surfaces of the sliding seals, possibly having a treatment such as zinc plating of the screen 6 which gives a low roughness and low coefficient of friction.

From what has been described it will likewise be clear that the illustrated embodiments may have variations and modifications incorporated therein. The form and the structure both of the sealing ring and of the said rigid screen can be varied, and in particular the screen may also exhibit the characteristics of a sealing ring by securing the annular lips to it and by using the other rigid ring simply as a track for sliding of the sliding lips. Moreover, it is not necessary that the screen 6 should be secured to a rotating member. In this case the efficiency of the sliding seal is not altered at all, but only the effect of centrifugation of the contaminants is lost.

- 12 -

Claims:

1.    A sealing assembly which can be interposed between
two members between which there is a relative peripheral
speed, to form a seal between a cavity lying between the
said members and the external environment, characterised
by the fact that it comprises a first (5) and second (6)
annular element each of which can be mounted on one of
the said members (2, 4) and rigidly connected to it, the
first (5)  of the said annular elements being provided
with at least one pair of annular lips (12, 13) of resiliently deformable material, a first (12) of which extends in a direction substantially parallel to the axis
of the said first element (2 ) and a second (13) of which
extends in a direction substantially radial to the said
axis, and the second (6) of the said annular elements
being provided with at least a first (20) and a second
(21) sliding surface which can come into contact with
the said first(12) and second (13) lip respectively when
the said elements are mounted on associated rotating
members (2, 4), in such a way that between each of the
said lips (12, 13) and the associated sliding surfaces
(20, 21) there is transmitted a predetermined pressure
for preventing the passage of lubricant and contaminating
substances between the said chamber and the external
environment.

2.    A sealing assembly according to Claim 1, characterised
by the fact that the said first lip (12) has, in section,
a form such as to extend away from the said axis from the
region of the root  towards its free end (14) and the
said second lip (13) has in section a form such as to extend away from the said second element (6) from the
root region towards its free end (15), the said first
(20) and second (21) surfaces of said second element (6)
being respectively substantially perpendicular and
parallel to the said axis, in such a way that the said
first lip (12) exhibits a substantially sealing action
to prevent the ingress of contaminating substances into
the said chamber and the second lip (13) exhibits a substantially sealing action to prevent the escape of lubricant from the said chamber.

3. A sealing assembly according to Claim 1 or Claim 2,
characterised by the fact that the said first (5) element
comprises a first support ring (7) which has a cylindrical
side wall (9) which can engage within a seat of one of
the said members (4) and an annular bottom wall (10), and
a second ring (11) formed integrally with the said two
lips (12, 13), the said second ring (11) being rigidly
connected to the first.

4. A sealing assembly according to Claim 3, characterised
by the fact that the said first ring (7) is made of a metal
material and the said second ring (11) is made from a
resiliently deformable material.

5. An assembly according the Claim 4, characterised by
the fact that the said material with which the said second
ring is made is a rubber.

6. A sealing assembly according to any of the preceding
claims, characterised by the fact that the said second element (6) has a part formed as a sleeve (22) which can
engage with one of the said rotating members (2), which sleeve
defines the said first surface (21), and a flange part
(18) orthogonal to the preceding parts, which defines
the said second surface (20).

7.   A sealing assembly according to any of the preceding
claims, characterised by the fact that the outer diameter
of the flange part (22) of the said second element (6)
is less than the inner diameter of the said cylindrical
side wall (9) of the said first element (5), in such a
way that when the said elements (5, 6) are assembled on
the said members there is a predetermined annular play($\underline{a}$)
between the edge of the said cylindrical side wall (9)
of the said first element (5) and the edge of the said
flange part (23) of the said second element (6) to form
a labyrinth seal between the said two elements.

8.   An assembly according to any of the preceding claims,
characterised by the fact that the said second element
(6) is mounted on the said rotating member (2) in such a
way as to obtain a centrifuging action on the said contaminating substances by the effect of the said flange
part (23) of the said second element (6).

Fig.1

Fig.2

Fig.4

Fig.3

Fig.5

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - C - 637 097 (H. MECKE)<br>* claims 1,2; fig. 2,4 *<br>-- | 1,3,7 | F 16 J 15/32<br>F 16 C 33/78 |
| | DE - A1 - 2 926 207 (IAO INDUSTRIE RI-UNITE S.P.A.)<br>* claims 1,5,7; fig. 1 to 6 *<br>-- | 1-7 | |
| | GB - A - 1 256 852 (SKF KUGELLAGERFA-BRIKEN GMBH)<br>* claim 1; fig. * | 1,4-6,<br>8 | |
| | US - A - 3 101 954 (E.F. HUDDLE)<br>* claim 1; fig. 1a,4,5,7 *<br>-- | 1-5,7 | TECHNICAL FIELDS SEARCHED (Int. Cl.³)<br><br>F 16 C 33/00<br>F 16 J 15/00 |
| | US - A - 3 639 016 (C.R. BOURGEOIS)<br>* claim 1; fig. 1,2 *<br>---- | 1-5 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 15-01-1982 | MASSALSKI |

EPO Form 1503.1   06.78